(19)

Europäisches
Patentamt

European
Patent Office

Office européen
des brevets

(11)     EP 4 379 695 A1

(12)     EUROPEAN PATENT APPLICATION

(43) Date of publication:
     05.06.2024  Bulletin 2024/23

(51) International Patent Classification (IPC):
     G08G 1/0965 (2006.01)     G08G 1/16 (2006.01)
     B60W 30/095 (2012.01)

(21) Application number: 22214835.5

(22) Date of filing: 20.12.2022

(52) Cooperative Patent Classification (CPC):
     G08G 1/0965; B60W 30/0956; G08G 1/162

(84) Designated Contracting States:
     AL AT BE BG CH CY CZ DE DK EE ES FI FR GB
     GR HR HU IE IS IT LI LT LU LV MC ME MK MT NL
     NO PL PT RO RS SE SI SK SM TR
     Designated Extension States:
     BA
     Designated Validation States:
     KH MA MD TN

(30) Priority:  01.12.2022  TW 111146115

(71) Applicant: Industrial Technology Research
     Institute
     Chutung, Hsinchu 310401 (TW)

(72) Inventors:
     • LI, Yu-Feng
       813423 Kaohsiung (TW)

     • LIN, Yu-Heng
       350005 Miaoli (TW)
     • YING, YU-Hsuan
       231037 New Taipei (TW)

(74) Representative: Kurig, Thomas
     Becker Kurig & Partner
     Patentanwälte mbB
     Bavariastraße 7
     80336 München (DE)

Remarks:
     Amended claims in accordance with Rule 137(2)
     EPC.

(54)     **AUTONOMOUS VEHICLE PATH PREDICTION SYSTEM AND AUTONOMOUS VEHICLE PATH PREDICTION METHOD WHILE ENCOUNTERING EMERGENCY VEHICLE**

(57)     An autonomous vehicle path prediction method (4) includes sensing vehicles driving on a road (2,3) and generating sensing signals corresponding to the vehicles; surrounding vehicles (22,32) and a current state of the emergency vehicle (23,33) and performing an emergency path prediction (22b,32b) corresponding to the emergency vehicle (23,33) when the vehicles further include the emergency vehicle (23,33); generating an emergency autonomous driving decision according to the emergency path prediction (22b,32b) and providing an autonomous vehicle path planning (21b,31b) corresponding to the emergency autonomous driving decision; and controlling the autonomous vehicle (21,31) to change the driving path and the driving mode on the road (2,3) according to the autonomous vehicle path planning (21b,31b).

FIG. 4

**Description**

Technical Field

The disclosure relates to a path prediction technique, and in particular relates to an autonomous vehicle path prediction system and an autonomous vehicle path prediction method while encountering emergency vehicles.

Background

Autonomous vehicles may sense their environment with technologies such as radar, optical radar, GPS, and computer vision, and convert the sensing data into suitable navigation roads, obstacles, and related signs. During operation, autonomous vehicles must be able to accurately determine the movement trajectory of surrounding objects, to serve as the basis for autonomous vehicle driving control, such as acceleration and deceleration, lane change, etc., to ensure the safety of autonomous vehicle operation. In addition, the autonomous vehicle may update its map information through sensing input data, so that vehicles may continuously track its location. An unmanned group of multiple autonomous vehicles may effectively reduce traffic pressure and thus improve the transportation efficiency of the transportation system.

The current autonomous vehicle has the ability of path prediction, which may predict the range of possible movement of surrounding vehicles in advance and make collision avoidance decisions. However, if there is an emergency vehicle on duty on the road, the national traffic laws and regulations of various countries require the driver to give way, or even park on the side of the road. Under such circumstances, driving path and driving mode of general vehicles make a huge change in a short period of time, such as the vehicles giving way and emergency braking. Therefore, in addition to detecting the location of emergency vehicles and giving way in accordance with traffic regulations, autonomous vehicles must also consider surrounding vehicles to initiate emergency decisions, which is a topic that urgently needs breakthroughs.

Summary

The disclosure provides an autonomous vehicle path prediction system, which is suitable for autonomous vehicles. The autonomous vehicle path prediction system includes a sensor and a processor coupled to the sensor. The sensor is used for sensing multiple vehicles driving on a road and generating sensing signals corresponding to the vehicles, in which the vehicles include at least one surrounding vehicle. The processor includes a determining module, a path prediction module, an emergency decision module, and a control module. The determining module determines whether the vehicles further include the emergency vehicle according to a network of vehicles and the sensing signals of the vehicle. When the determining module determines that the vehicles further include the emergency vehicle, the path prediction module obtains a current state of the surrounding vehicle and a current state of the emergency vehicle, and performs emergency path prediction corresponding to the emergency vehicle. An emergency decision module generates an emergency autonomous driving decision according to an emergency path prediction, and provides autonomous vehicle path planning corresponding to the emergency autonomous driving decision. A control module controls the autonomous vehicle to change a driving path and a driving mode on the road according to the autonomous vehicle path planning.

This disclosure provides an autonomous vehicle path prediction method, which is suitable for an autonomous vehicle path prediction system disposed on an autonomous vehicle. The autonomous vehicle path prediction system includes a sensor and a processor, the sensor is used for sensing multiple vehicles driving on a road and generating corresponding sensing signals of the vehicles. The vehicles include surrounding vehicles, and the processor is used for performing the autonomous vehicle path prediction method, including the following operation. Whether the vehicles include emergency vehicles is determined according to network of vehicles and the sensing signals of the vehicle. When the vehicles further includes an emergency vehicle, a current state of surrounding vehicles and a current state of the emergency vehicle are obtained, and emergency path prediction is performed corresponding to the emergency vehicle. Emergency autonomous driving decision is generated according to the emergency path prediction, and autonomous vehicle path planning is provided corresponding to the emergency autonomous driving decision. The autonomous vehicle is controlled to change a driving path and a driving mode on the road according to the autonomous vehicle path planning.

Based on the above, the autonomous vehicle path prediction system and the autonomous vehicle path prediction method described in this disclosure may determine whether there is an emergency vehicle on the road through the network of vehicles and sensor information, which is introduced in the emergency path prediction and determining module, and then used to determine the state of the road and introduced into the emergency decision module to obtain the optimized path.

BRIEF DESCRIPTION OF DRAWINGS

FIG. 1 is a structural diagram illustrating an autonomous vehicle path prediction system according to an embodiment of the disclosure.

FIG. 2A is a schematic diagram illustrating the path prediction performed in the autonomous vehicle path prediction system according to an embodiment of the disclosure.

FIG. 2B is a schematic diagram illustrating the generation of emergency autonomous driving decision in the autonomous vehicle path prediction system according to an embodiment of the disclosure.

FIG. 3A is a schematic diagram illustrating the path prediction performed in the autonomous vehicle path prediction system according to another embodiment of the disclosure.

FIG. 3B is a schematic diagram illustrating the generation of emergency autonomous driving decision in the autonomous vehicle path prediction system according to another embodiment of the disclosure.

FIG. 4 is a flowchart illustrating an autonomous vehicle path prediction method according to an embodiment of the disclosure.

FIG. 5 is a flowchart of obtaining the final states of surrounding vehicles in the autonomous vehicle path prediction system and method thereof according to an embodiment of the disclosure.

FIG. 6 is a flowchart illustrating the path prediction performed in the autonomous vehicle path prediction system and method thereof according to an embodiment of the disclosure.

FIG. 7 is a flowchart illustrating a safety mechanism when sampling surrounding vehicle paths in the autonomous vehicle path prediction system and method thereof according to an embodiment of the disclosure.

DETAILED DESCRIPTION OF DISCLOSED EMBODIMENTS

A portion of the embodiments of the disclosure will be described in detail with reference to the accompanying drawings. Element symbol referenced in the following description will be regarded as the same or similar element when the same element symbol appears in different drawings. These examples are only a portion of the disclosure and do not disclose all possible embodiments of the disclosure.

An autonomous vehicle, also known as driverless vehicle, computer-driven vehicle, unmanned vehicle, robot vehicle, or autonomous vehicle, is a vehicle that requires driver assistance or is completely unmanned. When the autonomous vehicle is an unmanned vehicle, the autonomous vehicle path prediction system described in this disclosure may continuously assist the autonomous vehicle to perform path prediction according to the driving paths of surrounding vehicles.

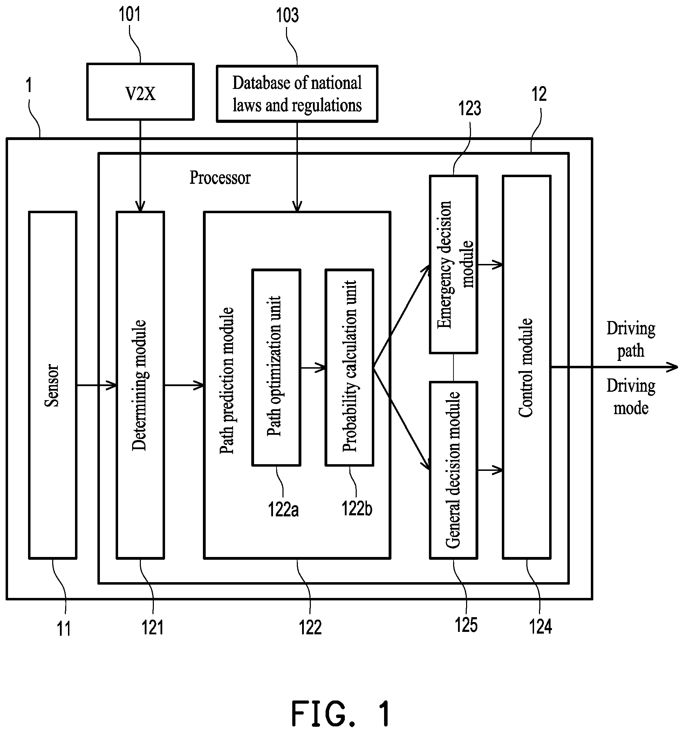

Referring to FIG. 1, FIG. 1 is a structural diagram illustrating an autonomous vehicle path prediction system 1 according to an embodiment of the disclosure. The autonomous vehicle path prediction system 1 is suitable for autonomous vehicles, and includes a sensor 11 and a processor 12 coupled to the sensor 11. The sensor 11 is used for sensing multiple vehicles driving on the same road as the autonomous vehicle and generating sensing signals corresponding to the vehicles, in which the vehicles include at least one surrounding vehicle. The processor 12 includes a determining module 121, a path prediction module 122, an emergency decision module 123, and a control module 124.

Practically speaking, the sensor 11 is, for example, a sensing device capable of sensing image or sound, such as a LiDAR sensor or an acoustic sensor. The processor 12 may be a central processing unit (CPU), a micro-processor, or an embedded controller, which is not limited in this disclosure.

The autonomous vehicle path prediction system 1 further includes any type of wireless network interface module (not shown) that supports WiFi standards or other wireless transmission functions. The autonomous vehicle path prediction system 1 may transmit or receive data through the network interface module. For example, the autonomous vehicle path prediction system 1 may be connected with a vehicle-to-everything (V2X) 101, also referred to as a network of vehicles, through a wireless network interface module. The V2X 101 is a cloud-based vehicle operation information platform. Its industry eco-chain includes ITS, logistics, passenger transportation and cargo, vehicle repairs and vehicle parts, vehicle rental service, enterprise vehicle management, automobile manufacturers, vehicle management, insurance, emergency rescue, mobile IoTs, etc.

When the autonomous vehicle is in motion, it may obtain traffic signal information on the surrounding roads or the moving state of emergency vehicles such as ambulances through the network of vehicles to assist the autonomous vehicle to drive safely on the road, or when an emergency vehicle is driving on the same road as the autonomous vehicle, the autonomous vehicle may give way in accordance with traffic regulations. If there is an emergency vehicle on the road coming from behind the autonomous vehicle, the autonomous vehicle path prediction system 1 described in this disclosure may immediately assist the autonomous vehicle to perform emergency path prediction corresponding to the emergency vehicle, so as to comply with the regulation of giving way in local traffic regulations.

Specifically, the national traffic laws and regulations of various countries stipulate that when the driver hears the siren of emergency vehicles such as fire engines, ambulances, police vehicles, engineering rescue vehicles, and toxic chemical disaster accident response vehicles on the driving road, the driver must give way immediately. Taking the Texas traffic regulations as an example, if an emergency vehicle is coming from behind rapidly, and the general vehicle is driving on the same road and in the same lane as the emergency vehicle, the general vehicle must gradually cut to the right to another lane, slow down, and stop on the right side of the other lane. But if the general vehicle is driving on the same road but on a different lane from the emergency vehicle, the general vehicle must also cut to the right side of the lane on the original lane, slow down, and gradually stop at the right side of the lane.

Therefore, the sensor 11 in the autonomous vehicle path prediction system 1 described in this disclosure may sense the driving states of the vehicles driving on the same road as the autonomous vehicle and surrounding the autonomous vehicle, generate corresponding sensing signals for these vehicles, and transmit the sensing signals to the determining module 121 of the processor 12. The determining module 121 determines whether there are other emergency vehicles such as ambulances, fire trucks, and emergency official vehicles on the road that the autonomous vehicle is driving besides surrounding vehicles according to the V2X 101 and the sensing signals of these vehicles.

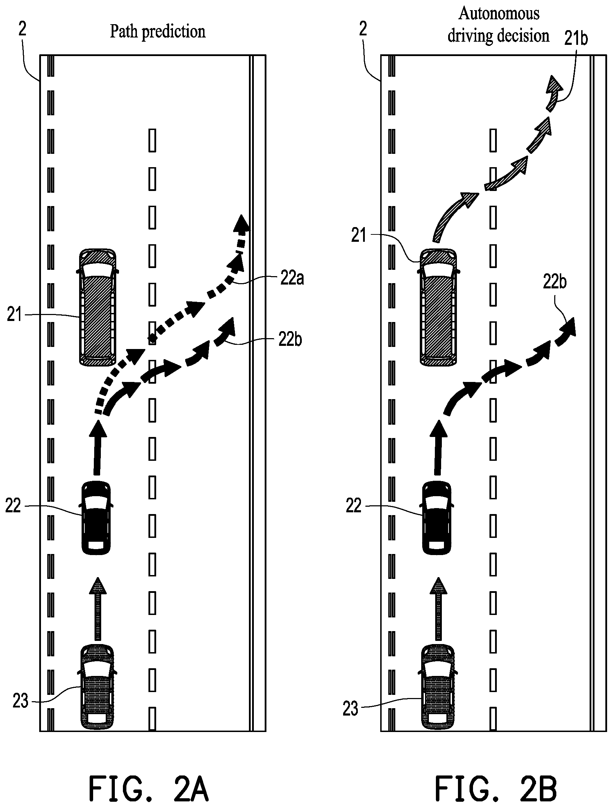

Referring to FIG. 1 and FIG. 2A at the same time, FIG. 2A is a schematic diagram illustrating the path prediction performed in the autonomous vehicle path prediction system 1 according to an embodiment of the disclosure. When the determining module 121 determines that there is a surrounding vehicle 22 on the road 2 where the autonomous vehicle 21 is driving on according to the V2X 101 and the sensing signals of these vehicles, the path prediction module 122 obtains the current state of the surrounding vehicle 22 (e.g., the position, acceleration, rudder angle, etc. of the surrounding vehicle 22), and performs a general path prediction 22a corresponding to surrounding vehicle 22. When the determining module 121 determines that in addition to the surrounding vehicle 22 driving with the autonomous vehicle 21 on the road 2, the vehicles driving on the same road 2 also include an emergency vehicle 23 according to the V2X 101 and the sensing signals of these vehicles, the path prediction module 122 obtains the current state of the surrounding vehicle 22 and the current state of the emergency vehicle 23, and performs an emergency path prediction 22b corresponding to the emergency vehicle 23.

To be more specific, taking the Texas traffic regulations as an example, if the emergency vehicle 23 is coming from behind rapidly on the road 2, and the surrounding vehicle 22 and the emergency vehicle 23 are driving in the same lane, then the surrounding vehicle 22 must cut to the right, slow down, and gradually stop to the right side. The path prediction module 122 of the autonomous vehicle path prediction system 1 obtains the current state of the surrounding vehicle 22 and the current state of the emergency vehicle 23, and performs the emergency path prediction 22b corresponding to the emergency vehicle 23. In addition, since the emergency vehicle 23 is coming from behind rapidly, the surrounding vehicle 22 on the same road 2 must cut to the right side faster to another lane and gradually stop on the right side of the lane to give way. Therefore, it may be seen from FIG. 2A that, compared with the general path prediction 22a, the emergency path prediction 22b is a more aggressive path prediction.

Referring to FIG. 1 and FIG. 2B at the same time, FIG. 2B is a schematic diagram illustrating the generation of emergency autonomous driving decision in the autonomous vehicle path prediction system 1 according to an embodiment of the disclosure. The emergency decision module 123 generates an emergency autonomous driving decision based on the emergency path prediction 22b, and provides an autonomous vehicle path planning 21b corresponding to the emergency autonomous driving decision to the autonomous vehicle 21. The control module 124 controls the autonomous vehicle 21 to change the driving path (e.g., cut right to another lane) and the driving mode (e.g., gradually stop on the right side of the lane) on the road 2 according to the autonomous vehicle path planning 21b.

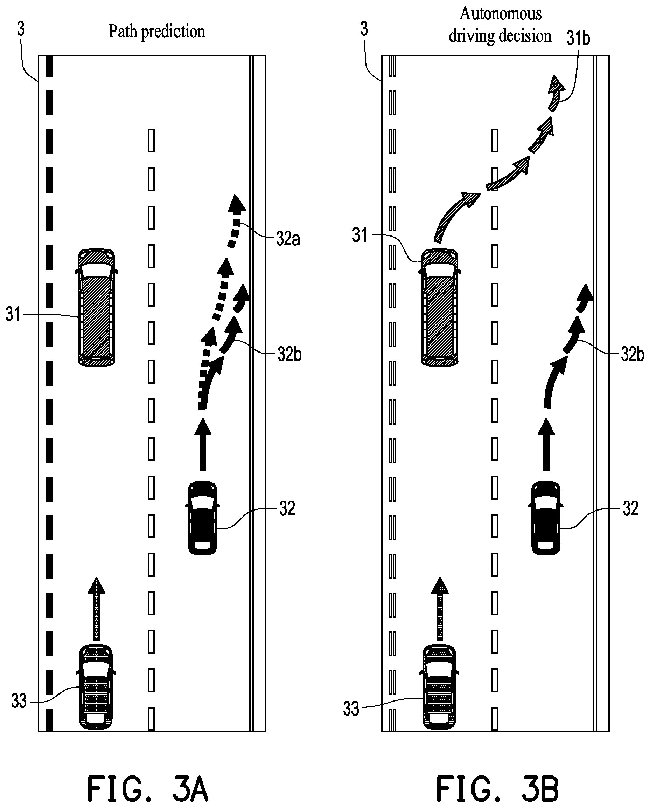

Referring to FIG. 1 and FIG. 3A at the same time, FIG. 3A is a schematic diagram illustrating the path prediction performed in the autonomous vehicle path prediction system 1 according to another embodiment of the disclosure. When the determining module 121 determines that there is a surrounding vehicle 32 on the road 3 where the autonomous vehicle 31 is driving on according to the V2X 101 and the sensing signals of these vehicles, the path prediction module 122 obtains the current state of the surrounding vehicle 32, and performs a general path prediction 32a corresponding to surrounding vehicle 32. When the determining module 121 determines that in addition to the surrounding vehicle 32 driving with the autonomous vehicle 31 on the road 3, the vehicles driving on the same road 3 also include an emergency vehicle 33 according to the V2X 101 and the sensing signals of these vehicles, the path prediction module 122 obtains the current state of the surrounding vehicle 32 and the current state of the emergency vehicle 33, and performs an emergency path prediction 32b corresponding to the emergency vehicle 33.

To be more specific, taking the Texas traffic regulations as an example, if the emergency vehicle 33 is coming from behind rapidly, and the surrounding vehicle 32 is driving on the road 3 and is in a different lane from the emergency vehicle 33, then the surrounding vehicle 32 must cut to the right side of original driving lane, slow down, and gradually stop on the right side of the lane. The path prediction module 122 of the autonomous vehicle path prediction system 1 obtains the current state of the surrounding vehicle 32 and the current state of the emergency vehicle 33, and performs the emergency path prediction 32b corresponding to the emergency vehicle 33. In addition, since the emergency vehicle 33 is coming from behind rapidly, the surrounding vehicle 32 on the same road 3 must cut to the right side of the original driving lane faster, slow down, and gradually stop on the right side of the lane. Therefore, it may be seen from FIG. 3A that, compared with the general path prediction 32a, the emergency path prediction 32b is a more aggressive path prediction.

Referring to FIG. 1 and FIG. 3B at the same time, FIG. 3B is a schematic diagram illustrating the generation of emergency autonomous driving decision in the autonomous vehicle path prediction system 1 according to another embodiment of the disclosure. The emergency decision module 123 generates an emergency autonomous driving decision based on the emergency path prediction 32b, and provides an autonomous vehicle path planning 31b corresponding to the emergency autonomous driving decision to the autonomous vehicle 31. The control module 124 controls the autonomous vehicle 31 to change the driving path (e.g., cut right to another lane) and the driving mode (e.g., gradually stop on the right side of the lane) on the road 3 according to the autonomous vehicle path planning 31b.

In addition, if the determining module 121 determines that the emergency vehicle is not included in the multiple vehicles, the path prediction module 122 obtains the final state of the surrounding vehicle, and performs general path prediction corresponding to the surrounding vehicle (e.g., the general path prediction 22a as shown in FIG. 2A, and the general path prediction 32a shown in FIG. 3A).

In one embodiment, the processor 12 in the autonomous vehicle path prediction system 1 further includes a general decision module 125. The general decision module 125 is used for generating a general autonomous driving decision according to the general path prediction, and providing autonomous vehicle path planning corresponding to the general autonomous driving decision. The control module 124 controls the autonomous vehicle to change the driving path (e.g., maintain the original driving path or change lanes according to the driving path of the surrounding vehicle) and the driving mode (e.g., maintain the original driving speed or adjust the driving speed) on the road according to the autonomous vehicle path planning.

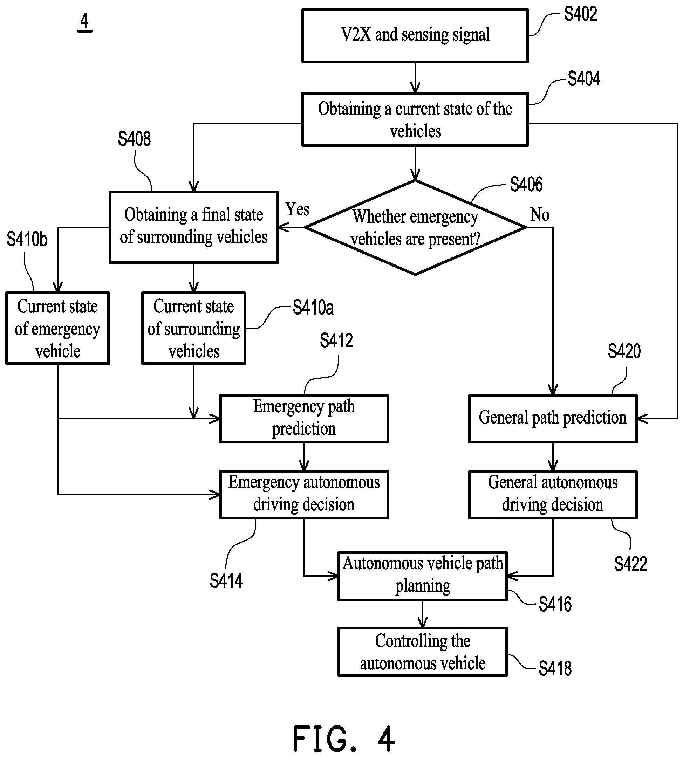

Referring to FIG. 1 and FIG. 4 at the same time, FIG. 4 is a flowchart illustrating an autonomous vehicle path prediction method 4 according to an embodiment of the disclosure. The autonomous vehicle path prediction method 4 described in this disclosure is suitable for the autonomous vehicle path prediction system 1 disposed on the autonomous vehicle. As mentioned above, the autonomous vehicle path prediction system 1 includes a sensor 11 and a processor 12, the sensor 11 is used for sensing multiple vehicles driving on a road and generating sensing signals corresponding to the multiple vehicles, in which the multiple vehicles include at least one surrounding vehicle. The processor 12 is used for performing the autonomous vehicle path prediction method 4. The autonomous vehicle path prediction method 4 includes steps S402 to S422, each step is further described below.

In step S402, the V2X 101 is connected through a wireless network, and sensing signals of multiple vehicles generated by the sensor 11 are received, in which the multiple vehicles include at least one surrounding vehicle. In step S404, the current states of the multiple vehicles are obtained according to the sensing signals of the multiple vehicles. In step S406, it is determined whether the multiple vehicles further include an emergency vehicle according to the V2X and the sensing signals of the multiple vehicles. When the multiple vehicles further include an emergency vehicle, in step S408, multiple final states of the surrounding vehicles are obtained to generate an emergency path prediction to be performed subsequently corresponding to the emergency vehicle.

Next, steps S410a and S410b are performed simultaneously. In step S410a, the current states of the surrounding vehicles are obtained according to the V2X and the sensing signals of the multiple vehicles. In step S410b, the current state of the emergency vehicle of the emergency vehicle is obtained according to the V2X and the sensing signals of the emergency vehicle. Once the autonomous vehicle path prediction system 1 obtains multiple final states of the surrounding vehicles, the current state of the surrounding vehicles, and the current state of the emergency vehicle, in step S412, emergency path prediction is performed corresponding to the emergency vehicle. In step S414, an emergency autonomous driving decision is generated according to the emergency path prediction and the current state of the emergency vehicle. In step S416, an autonomous vehicle path planning corresponding to the emergency autonomous driving decision is provided. In step S418, the autonomous vehicle is controlled to change the driving path (e.g., the driving path is changed to cut right into another lane, or to cut to the right side of the original driving lane according to whether the autonomous vehicle and the emergency vehicle are in the same lane) and the driving mode (e.g., gradually stop on the right side of the lane) on the road according to the autonomous vehicle path planning.

In addition, if it is determined in step S406 that the emergency vehicle is not included in the multiple vehicles, then in step S420, the general final state of the surrounding vehicles is obtained, and the general path prediction corresponding to the surrounding vehicles is performed. In step S422, a general autonomous driving decision is generated according to the general path prediction. Next, in step S416, an autonomous vehicle path planning corresponding to a general autonomous driving decision is provided. In step S418, the autonomous vehicle is controlled to change the driving path (e.g., the original driving path is maintained or lanes are changed according to the driving path of the surrounding vehicle) and the driving mode (e.g., the original driving speed is maintained or the driving speed is adjusted) on the road according to the autonomous vehicle path planning.

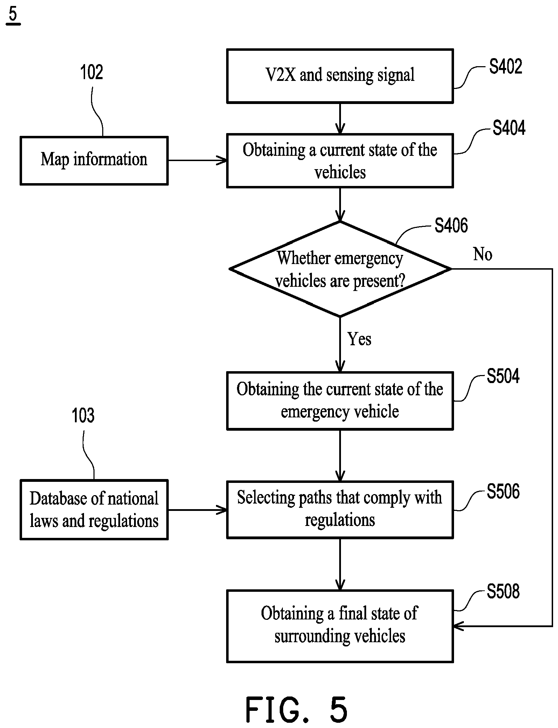

FIG. 5 is a flowchart of obtaining the final states of surrounding vehicles in the autonomous vehicle path prediction system 1 and the autonomous vehicle path prediction method 4 according to an embodiment of the disclosure, in which step S402, step S404, and step S406 in FIG. 5 are the same as step S402, step S404, and step S406 in FIG. 4. In step S402, the determining module 121 is connected to the V2X 101 through a wireless network, and sensing signals from multiple vehicles generated by the sensor 11 are received. In step S404, the path prediction module 122 obtains the current states of the multiple vehicles according to the sensing signals of the multiple vehicles. Afterwards, the path prediction module 122 may further sample multiple surrounding vehicle paths of the surrounding vehicles according to the map information 102 and the current states of the surrounding vehicles.

Next, in step S406, the determining module 121 determines whether the multiple vehicles further include an emergency vehicle according to the V2X and the sensing signals of the multiple vehicles. If the emergency vehicle is not included in the multiple vehicles, then in step S508, the path prediction module 122 obtains the general final state of the surrounding vehicles, and performs general path prediction corresponding to the surrounding vehicles.

Conversely, if the emergency vehicle is included in the multiple vehicles, then in step S504, the path prediction module 122 obtains the current state of the emergency vehicle according to the V2X and the sensing signals of the emergency vehicle, and performs emergency path prediction corresponding to the emergency vehicle. Next, in step S506, the path prediction module 122 selects multiple paths that comply with regulations from the surrounding vehicle paths according to the database of national laws and regulations 103 of each country, and in step S508, multiple final states of the surrounding vehicles are obtained according to the paths that comply with regulations. The purpose of obtaining the final state of the surrounding vehicles is to generate the general path prediction corresponding to the surrounding vehicles and the emergency path prediction corresponding to the emergency vehicles to be performed by the path prediction module 122 subsequently.

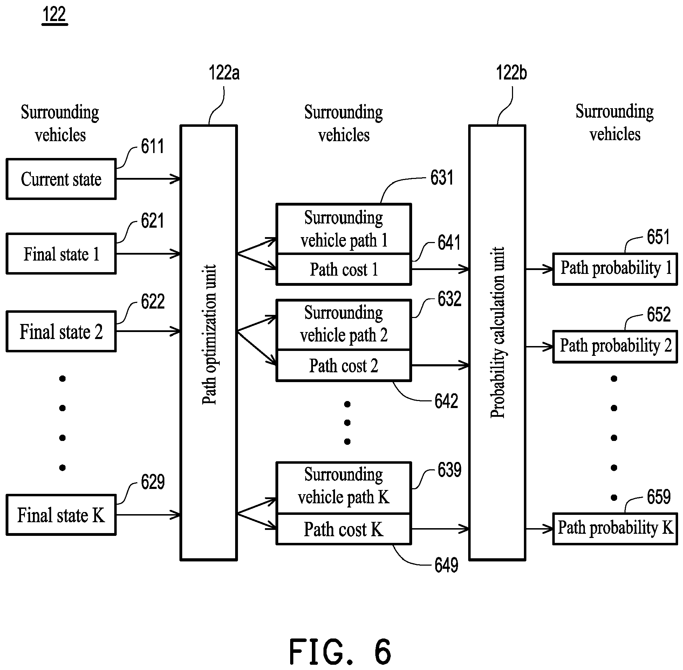

FIG. 6 is a flowchart illustrating the path prediction performed in the autonomous vehicle path prediction system 1 and the autonomous vehicle path prediction method 4 according to an embodiment of the disclosure. In one embodiment, the path prediction module 122 in the autonomous vehicle path prediction system 1 further includes a path optimization unit 122a and a probability calculation unit 122b. The path optimization unit 122a is used for calculating the surrounding vehicle path 1 631, the surrounding vehicle path 2 632, ..., and the surrounding vehicle path K 639, and the path cost 1 641, the path cost 2 642, ..., and the path cost K 649 according to the current state 611 of surrounding vehicles, the final state 1 621, the final state 2 622, ..., and the final state K 629. Each of the surrounding vehicle path 1 631, the surrounding vehicle path 2 632, ..., and the surrounding vehicle path K 639 corresponds to each of the final state 1 621, the final state 2 622, ..., and the final state K 629 of the surrounding vehicles, while each of the path cost 1 641, the path cost 2 642, ..., and the path cost K 649 of the surrounding vehicles corresponds to each of the surrounding vehicle path 1 631, the surrounding vehicle path 2 632, ..., and the surrounding vehicle path K 639 one by one. The probability calculation unit 122b is used for calculating the path probability 1 651, the path probability 2 652, ..., and the path probability K 659 according to the path cost 1 641, the path cost 2 642, ..., and the path cost K 649 one by one.

In particular, the path cost of the surrounding vehicles is related to the position, velocity vector, and acceleration vector of the surrounding vehicles, as well as the surrounding vehicle path. For example, the longer it takes for surrounding vehicles to drive from the current position to the final position, the higher the path cost. In addition, each of the multiple path costs of the surrounding vehicles has an inverse relationship with its corresponding path probability, that is, the higher the path cost, the lower the corresponding path probability; conversely, the lower the path cost, the greater the corresponding path probability. Each of the path probability 1 651, the path probability 2 652, ..., and the path probability K 659 are between 0 and 1, and the sum of the path probability 1 651, the path probability 2 652, ..., and the path probability K 659 is 1.

The path optimization unit 122a may further divide each of the surrounding vehicle path 1 631, the surrounding vehicle path 2 632, ..., and the surrounding vehicle path K 639 into multiple unit paths per time unit, so as to calculate the path cost 641, the path cost 2 642, ..., and the path cost K 649 more accurately. In one embodiment, the path optimization unit 122a calculates multiple expended times that is expended for each of the surrounding vehicle path 1 631, the surrounding vehicle path 2 632, ..., and the surrounding vehicle path K 639, and each of the multiple expended times are segmented into multiple time units and multiple time sets are formed. For example, if the path optimization unit 122a sets the time unit as 10 milliseconds (ms), and the expended time that is expended for the surrounding vehicles to travel along the surrounding vehicle path 1 631 is 3 seconds (s), then the time set is formed by 300 time units.

The path optimization unit 122a calculates the path cost 1 641 corresponding to the surrounding vehicle path 1 631 with the 300 time units in the time set. Similarly, the path optimization unit 122a also calculates the path cost 2 642, ..., and the path cost K 649 corresponding to each of the surrounding vehicle path 2 632, ..., and the surrounding vehicle path K 639 one by one with the time set formed by each of the surrounding vehicle path 2 632, ..., and the surrounding vehicle path K 639.

In one embodiment, the path optimization unit 122a obtains the position, velocity vector, and acceleration vector of the surrounding vehicles in each time unit in each time set, and calculates the corresponding the path cost 641, the path cost 2 642, ..., and the path cost K 649 of each of the surrounding vehicle path 1 631, the surrounding vehicle path 2 632, ..., and the surrounding vehicle path K 639.

As mentioned above, the lower the path cost of the surrounding vehicles, the greater the corresponding path probability. Therefore, the path prediction module 122 selects the surrounding vehicle path (e.g., the surrounding vehicle path 1 631) corresponding to the largest among the path probability 1 651, the path probability 2 652, ..., and the path probability K 659 of the surrounding vehicles (e.g., the path probability 1 651), and performs emergency path prediction corresponding to the emergency vehicle or general path prediction corresponding to the surrounding vehicle according to the selected surrounding vehicle path (e.g., the surrounding vehicle path 1 631). This emergency path prediction or general path prediction is the safest path prediction.

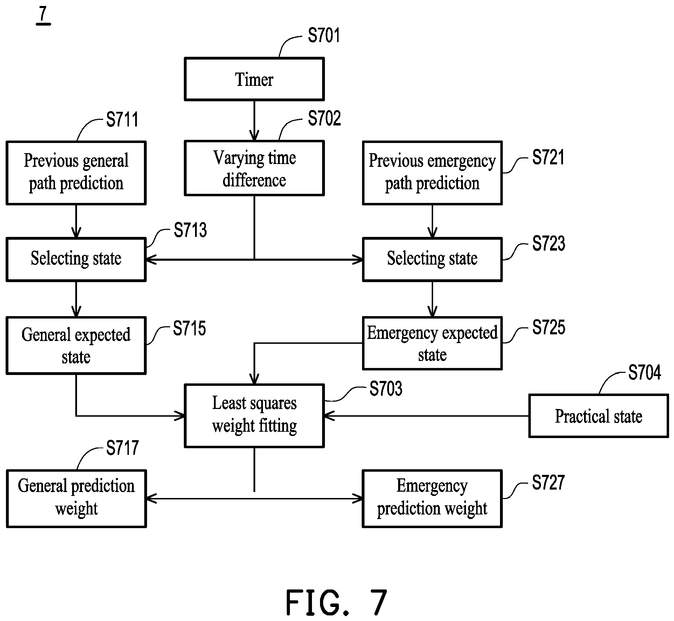

In addition, the autonomous vehicle path prediction system 1 described in this disclosure may further design safety mechanisms for the emergency path prediction corresponding to the emergency vehicle or the general path prediction corresponding to the surrounding vehicles. FIG. 7 is a flowchart illustrating a safety mechanism 7 when sampling surrounding vehicle paths in the autonomous vehicle path prediction system 1 and the autonomous vehicle path prediction method 4 according to an embodiment of the disclosure. Regardless of whether there is an emergency vehicle on the road where the autonomous vehicle is driving on, the path prediction module 122 may perform emergency path prediction corresponding to the emergency vehicle or general path prediction corresponding to the surrounding vehicles according to the selected surrounding vehicle paths. Afterwards, the path optimization unit 122a in the path prediction module 122 divides the selected surrounding vehicle paths into multiple unit paths per time unit, and performs general path prediction corresponding to the surrounding vehicles or emergency path prediction corresponding to the emergency vehicle.

In step S701, the timer in the path prediction module 122 performs a timing operation. In step S702, the expended time that is expended by the surrounding vehicle paths is segmented into multiple time units, so as to generate multiple varying time differences. When the path prediction module 122 performs the general path prediction, since the expended time that is expended by the surrounding vehicle path has been segmented into multiple time units, the general path prediction is also segmented into multiple unit general path predictions. The path prediction module 122 performs the unit general path prediction at each of the varying time differences.

In step S711, the path prediction module 122 performs the previous unit general path prediction. In step S713, the path prediction module 122 selects the current state of the surrounding vehicles according to the previous unit general path prediction at each of the varying time differences. In step S715, the path prediction module 122 determines the general expected state $S_{general}$ of the surrounding vehicles according to the selected current state of the surrounding vehicles (e.g., the acceleration of the surrounding vehicles when there is no emergency vehicle on the road).

Similarly, when the path prediction module 122 performs the emergency path prediction, since the expended time that is expended by the surrounding vehicle path has been segmented into multiple time units, the emergency path prediction is also segmented into multiple unit emergency path predictions. The path prediction module 122 performs the unit emergency path prediction at each of the varying time differences. In step S721, the path prediction module 122 performs the previous unit emergency path prediction. In step S723, the path prediction module 122 selects the current state of the surrounding vehicles according to the previous unit emergency path prediction at each of the varying time differences. In step S725, the path prediction module 122 determines the emergency expected state $S_{emergency}$ of the surrounding vehicles according to the selected current state of the surrounding vehicles (e.g., the acceleration of the surrounding vehicles when there is an emergency vehicle on the road).

In step S703, the path prediction module 122 performs least squares weight fitting according to the practical state $S_{practical}$ of the surrounding vehicles (e.g., the practical acceleration of the surrounding vehicles), the general expected state $S_{general}$, and the emergency expected state $S_{emergency}$ obtained in step S704. In step S717, the path prediction module 122 updates the general prediction weight $W_{general}$ through the fitting assumption and the optimization cost function, and in step S727, the path prediction module 122 updates the emergency prediction weight $W_{emergency}$ through the fitting assumption and the optimization cost function.

In detail, the fitting assumption are as follows:

$S_{practical} \approx W_{general}S_{general} + W_{emergency}S_{emergency}$, the general prediction weight $W_{general}$ and the emergency prediction weight $W_{emergency}$ are both real numbers, and $0 \leq W_{general}, W_{emergency} \leq 1$.

The optimization cost function may be derived from the fitting assumption as follows:

$$\text{Optimization cost function} = \left\| S_{practical} - W_{general}S_{general} - W_{emergency}S_{emergency} \right\|$$

The path prediction module 122 updates the general prediction weight $W_{general}$ and the emergency prediction weight $W_{emergency}$ according to the practical state $S_{practical}$, the general expected state $S_{general}$, and the emergency expected state $S_{emergency}$ of the surrounding vehicles.

As mentioned above, when the path prediction module 122 performs general path prediction and emergency path prediction, it selects the surrounding vehicle path corresponding to the surrounding vehicle with the maximum path probability, and performs an emergency path prediction corresponding to the emergency vehicle or a general path prediction corresponding to the surrounding vehicles according to the selected surrounding vehicle path. Once the path prediction module 122 updates the general prediction weight $W_{general}$ and the emergency prediction weight $W_{emergency}$, the safest path prediction result may be obtained, that is, $W_{general} \times$ (the maximum path probability of surrounding vehicles when there is an emergency vehicle)+$W_{emergency} \times$ (the maximum path probability of surrounding vehicles when there are no emergency vehicles).

To sum up, the autonomous vehicle path prediction system and the autonomous vehicle path prediction method described in this disclosure may determine whether there is an emergency vehicle on the road through the network of vehicles and sensor information, and perform the emergency path prediction corresponding to the emergency vehicle, and even control the autonomous vehicle to change the driving path and the driving mode on the road while considering the path cost and safety.

**Claims**

1. An autonomous vehicle path prediction system (1), suitable for an autonomous vehicle (21,31), the autonomous vehicle path prediction system (1) comprising:

   a sensor (11), used for sensing a plurality of vehicles driving on a road (2,3) and generating sensing signals corresponding to the vehicles, wherein the vehicles comprise at least one surrounding vehicle (22,32); and
   a processor (12), coupled to the sensor (11), the processor (12) comprising:

   a determining module (121), used for determining whether the vehicles further comprise an emergency vehicle (23,33) according to a vehicle-to-everything (V2X) (101) and the sensing signals of the vehicles;
   a path prediction module (122), used for obtaining a current state (611) of the at least one surrounding vehicle (22,32) and a current state of the emergency vehicle (23,33), and performing an emergency path prediction (22b,32b) corresponding to the emergency vehicle (23,33) when the determining module (121) determines that the vehicles further comprise the emergency vehicle (23,33);
   an emergency decision module (123), used for generating an emergency autonomous driving decision according to the emergency path prediction (22b,32b), and providing autonomous vehicle path planning (21b,31b) corresponding to the emergency autonomous driving decision; and
   a control module (124), used for controlling the autonomous vehicle (21,31) to change a driving path and a driving mode on the road (2,3) according to the autonomous vehicle path planning (21b,31b).

2. The autonomous vehicle path prediction system (1) according to claim 1, wherein a plurality of surrounding vehicle paths (631,632,639) of the at least one surrounding vehicle (22,32) are sampled according to map information (102) and the current state of the at least one surrounding vehicle (22,32) after the path prediction module (122) obtains the current state of the at least one surrounding vehicle (22,32), a plurality of paths that comply with regulations are selected from the surrounding vehicle paths (631,632,639) according to a database of national laws and regulations (103) of each country, and a plurality of final states (621,622,629) of the at least one surrounding vehicle (22,32) are obtained according to the paths that comply with the regulations.

3. The autonomous vehicle path prediction system (1) according to claim 2, wherein the path prediction module (122) obtains the final states (621,622,629) of the at least one surrounding vehicle (22,32), and performs a general path prediction (22a,32a) corresponding to the at least one surrounding vehicle (22,32) when the determining module (121) determines that the emergency vehicle (23,33) is not comprised in the vehicles.

4. The autonomous vehicle path prediction system (1) according to claim 3, wherein the processor (12) further comprises:
   a general decision module (125), used for generating a general autonomous driving decision according to the general path prediction (22a,32a), and providing the autonomous vehicle path planning (21b,31b) corresponding to the general autonomous driving decision.

5. The autonomous vehicle path prediction system (1) according to claim 4, wherein the path prediction module (122) further comprises:

   a path optimization unit (122a), used for calculating the surrounding vehicle paths (631,632,639) of the at least one surrounding vehicle (22,32) and a corresponding plurality of path costs (641,642,649) according to the current state of the at least one surrounding vehicle (22,32) and the final states (621,622,629); and
   a probability calculation unit (122b), used for calculating a plurality of path probabilities (651,652,659) of the at least one surrounding vehicle (22,32) according to the path costs (641,642,649) of the at least one surrounding vehicle (22,32).

6. The autonomous vehicle path prediction system (1) according to claim 5, wherein the path probabilities (651,652,659) are between 0 and 1, and a sum of the path probabilities (651,652,659) is 1.

7. The autonomous vehicle path prediction system (1) according to any one of claims 5 to 6, wherein the path costs (641,642,649) and the path probabilities (651,652,659) are in an inverse relationship.

8. The autonomous vehicle path prediction system (1) according to any one of claims 5 to 7, wherein the path optimization unit (122a) calculates a plurality of expended times that is expended for each of the surrounding vehicle paths (631,632,639), segments each of the expended times into a plurality of time units and forming a plurality of time sets, and calculates the path costs (641,642,649) corresponding to the surrounding vehicle paths (631,632,639) in each of the time sets with each of the time units as a calculation unit.

9. The autonomous vehicle path prediction system (1) according to claim 8, wherein the path optimization unit (122a) obtains a position, a velocity vector, and an acceleration vector of the at least one surrounding vehicle (22,32) in each of the time units in each of the time sets, and calculates the path costs (641,642,649) corresponding to the surrounding vehicle paths (631,632,639).

10. The autonomous vehicle path prediction system (1) according to any one of claims 5 to 9, wherein the path prediction module (122) selects the surrounding vehicle path (631,632,639) corresponding to the at least one surrounding vehicle (22,32) with a maximum path probability, and performs the emergency path prediction (22b,32b) corresponding to the emergency vehicle (23,33) or the general path prediction (22a,32a) corresponding to the at least one surrounding vehicle (22,32) according to the selected surrounding vehicle path (631,632,639).

11. An autonomous vehicle path prediction method (4), suitable for an autonomous vehicle path prediction system (1) disposed on an autonomous vehicle (21,31), wherein the autonomous vehicle path prediction system (1) comprises a sensor (11) and a processor (12), the sensor (11) is used for sensing a plurality of vehicles driving on a road (2,3) and generating corresponding sensing signals of the vehicles, wherein the vehicles comprise at least one surrounding vehicle (22,32), and the processor (12) is used for performing the autonomous vehicle path prediction method (4), comprising:

determining whether the vehicles further comprise an emergency vehicle (23,33) according to a vehicle-to-everything (V2X) (101) and the sensing signals of the vehicles;
obtaining a current state of the at least one surrounding vehicle (22,32) and a current state of the emergency vehicle (23,33), and performing an emergency path prediction (22b,32b) corresponding to the emergency vehicle (23,33) when the vehicles further comprise the emergency vehicle (23,33);
generating an emergency autonomous driving decision according to the emergency path prediction (22b,32b), and providing autonomous vehicle path planning (21b,31b) corresponding to the emergency autonomous driving decision; and
controlling the autonomous vehicle (21,31) to change a driving path and a driving mode on the road (2,3) according to the autonomous vehicle path planning (21b,31b).

12. The autonomous vehicle path prediction method (4) according to claim 11, further comprising:
obtaining general final states (621,622,629) of the at least one surrounding vehicle (22,32), and performing a general path prediction (22a,32a) corresponding to the at least one surrounding vehicle (22,32) when the emergency vehicle (23,33) is not comprised in the vehicles.

13. The autonomous vehicle path prediction method (4) according to claim 12, further comprising:
generating a general autonomous driving decision according to the general path prediction (22a,32a), and providing the autonomous vehicle path planning (21b,31b) corresponding to the general autonomous driving decision.

14. The autonomous vehicle path prediction method (4) according to any one of claims 11 to 13, further comprising:

sampling a plurality of surrounding vehicle paths (631,632,639) of the at least one surrounding vehicle (22,32) according to map information (102) and the current state of the at least one surrounding vehicle (22,32) after obtaining the current state of the at least one surrounding vehicle (22,32);

selecting a plurality of paths that comply with regulations from the surrounding vehicle paths (631,632,639) according to a database of national laws and regulations (103) of each country; and

obtaining a plurality of emergency final states (621,622,629) of the at least one surrounding vehicle (22,32) according to the paths that comply with the regulations.

15. The autonomous vehicle path prediction method (4) according to claim 14, further comprising:

calculating the surrounding vehicle paths (631,632,639) of the at least one surrounding vehicle (22,32) and a corresponding plurality of path costs (641,642,649) according to the current state of the at least one surrounding vehicle (22,32) and the emergency final states (621,622,629); and

calculating a plurality of path probabilities (651,652,659) of the at least one surrounding vehicle (22,32) according to the surrounding vehicle paths (631,632,639) and the path costs (641,642,649) of the at least one surrounding vehicle (22,32).

16. The autonomous vehicle path prediction method (4) according to claim 15, wherein the path probabilities (651,652,659) are between 0 and 1, and a sum of the path probabilities (651,652,659) is 1.

17. The autonomous vehicle path prediction method (4) according to any one of claims 15 to 16, wherein the path costs (641,642,649) and the path probabilities (651,652,659) are in an inverse relationship.

18. The autonomous vehicle path prediction method (4) according to any one of claims 15 to 17, further comprising:

calculating a plurality of expended times that is expended for each of the surrounding vehicle paths (631,632,639);

segmenting each of the expended times into a plurality of time units and forming a plurality of time sets; and

calculating the path costs (641,642,649) corresponding to the surrounding vehicle paths (631,632,639) in each of the time sets with each of the time units as a calculation unit.

19. The autonomous vehicle path prediction method (4) according to claim 18, further comprising:

obtaining a position, a velocity vector, and an acceleration vector of the at least one surrounding vehicle (22,32) in each of the time units in each of the time sets, and calculating the path costs (641,642,649) corresponding to the surrounding vehicle paths (631,632,639).

20. The autonomous vehicle path prediction method (4) according to any one of claims 15 to 19, further comprising:

selecting the surrounding vehicle path (631,632,639) corresponding to the at least one surrounding vehicle (22,32) with a maximum path probability; and

performing the emergency path prediction (22b,32b) corresponding to the emergency vehicle (23,33) or the general path prediction (22a,32a) corresponding to the at least one surrounding vehicle (22,32) according to the selected surrounding vehicle path (631,632,639).

**Amended claims in accordance with Rule 137(2) EPC.**

1. An autonomous vehicle path prediction system (1), suitable for an autonomous vehicle (21,31), the autonomous vehicle path prediction system (1) comprising:

a sensor (11), used for sensing a plurality of vehicles driving on a road (2,3) and generating sensing signals corresponding to the vehicles, wherein the vehicles comprise at least one surrounding vehicle (22,32); and

a processor (12), coupled to the sensor (11), the processor (12) comprising:

a determining module (121), used for determining whether the vehicles further comprise an emergency vehicle (23,33) according to a vehicle-to-everything (V2X) (101) and the sensing signals of the vehicles;

a path prediction module (122), used for obtaining a current state (611) of the at least one surrounding vehicle (22,32) and a current state of the emergency vehicle (23,33), sampling a plurality of surrounding vehicle paths (631,632,639) of the at least one surrounding vehicle (22,32) according to map information (102) and the current state of the at least one surrounding vehicle (22,32), selecting a plurality of paths that comply with traffic regulations from the surrounding vehicle paths (631,632,639) according to the traffic regulations for giving way to the emergency vehicle in a database of national laws and regulations (103) of each country,

the autonomous vehicle path prediction system (1) being **characterized in that** the path prediction module (122) is further used for obtaining a plurality of final states (621,622,629) of the at least one surrounding vehicle (22,32) according to the paths that comply with the traffic regulations, and performing an emergency path prediction (22b,32b) corresponding to the emergency vehicle (23,33) when the determining module (121) determines that the vehicles further comprise the emergency vehicle (23,33);

an emergency decision module (123), used for generating an emergency autonomous driving decision according to the emergency path prediction (22b,32b), and providing autonomous vehicle path planning (21b,31b) corresponding to the emergency autonomous driving decision; and

a control module (124), used for controlling the autonomous vehicle (21,31) to change a driving path and a driving mode on the road (2,3) according to the autonomous vehicle path planning (21b,31b).

2. The autonomous vehicle path prediction system (1) according to claim 1, wherein the path prediction module (122) obtains the final states (621,622,629) of the at least one surrounding vehicle (22,32), and performs a general path prediction (22a,32a) corresponding to the at least one surrounding vehicle (22,32) when the determining module (121) determines that the emergency vehicle (23,33) is not comprised in the vehicles.

3. The autonomous vehicle path prediction system (1) according to claim 2, wherein the processor (12) further comprises:

a general decision module (125), used for generating a general autonomous driving decision according to the general path prediction (22a,32a), and providing the autonomous vehicle path planning (21b,31b) corresponding to the general autonomous driving decision.

4. The autonomous vehicle path prediction system (1) according to claim 3, wherein the path prediction module (122) further comprises:

a path optimization unit (122a), used for calculating the surrounding vehicle paths (631,632,639) of the at least one surrounding vehicle (22,32) and a corresponding plurality of path costs (641,642,649) according to the current state of the at least one surrounding vehicle (22,32) and the final states (621,622,629); and

a probability calculation unit (122b), used for calculating a plurality of path probabilities (651,652,659) of the at least one surrounding vehicle (22,32) according to the path costs (641,642,649) of the at least one surrounding vehicle (22,32).

5. The autonomous vehicle path prediction system (1) according to claim 4, wherein the path probabilities (651,652,659) are between 0 and 1, and a sum of the path probabilities (651,652,659) is 1.

6. The autonomous vehicle path prediction system (1) according to any one of claims 4 to 5, wherein the path costs (641,642,649) and the path probabilities (651,652,659) are in an inverse relationship.

7. The autonomous vehicle path prediction system (1) according to any one of claims 4 to 6, wherein the path optimization unit (122a) calculates a plurality of expended times that is expended for each of the surrounding vehicle paths (631,632,639), segments each of the expended times into a plurality of time units and forming a plurality of time sets, and calculates the path costs (641,642,649) corresponding to the surrounding vehicle paths (631,632,639) in each of the time sets with each of the time units as a calculation unit.

8. The autonomous vehicle path prediction system (1) according to claim 7, wherein the path optimization unit (122a) obtains a position, a velocity vector, and an acceleration vector of the at least one surrounding vehicle (22,32) in each of the time units in each of the time sets, and calculates the path costs (641,642,649) corresponding to the surrounding vehicle paths (631,632,639).

9. The autonomous vehicle path prediction system (1) according to any one of claims 4 to 8, wherein the path prediction module (122) selects the surrounding vehicle path (631,632,639) corresponding to the at least one surrounding vehicle (22,32) with a maximum path probability, and performs the emergency path prediction (22b,32b) corresponding to the emergency vehicle (23,33) or the general path prediction (22a,32a) corresponding to the at least one surrounding vehicle (22,32) according to the selected surrounding vehicle path (631,632,639).

10. An autonomous vehicle path prediction method (4), suitable for an autonomous vehicle path prediction system (1) disposed on an autonomous vehicle (21,31), wherein the autonomous vehicle path prediction system (1) comprises a sensor (11) and a processor (12), the sensor (11) is used for sensing a plurality of vehicles driving on a road (2,3) and generating corresponding sensing signals of the vehicles, wherein the vehicles comprise at least one surrounding vehicle (22,32), and the processor (12) is used for performing the autonomous vehicle path prediction method (4), comprising:

determining whether the vehicles further comprise an emergency vehicle (23,33) according to a vehicle-to-everything (V2X) (101) and the sensing signals of the vehicles;
obtaining a current state of the at least one surrounding vehicle (22,32) and a current state of the emergency vehicle (23,33), and performing an emergency path prediction (22b,32b) corresponding to the emergency vehicle (23,33) when the vehicles further comprise the emergency vehicle (23,33);
sampling a plurality of surrounding vehicle paths (631,632,639) of the at least one surrounding vehicle (22,32) according to map information (102) and the current state of the at least one surrounding vehicle (22,32), and selecting a plurality of paths that comply with traffic regulations from the surrounding vehicle paths (631,632,639) according to the traffic regulations for giving way to the emergency vehicle in a database of national laws and regulations (103) of each country, the method being **characterized in** further comprising:

obtaining a plurality of final states (621,622,629) of the at least one surrounding vehicle (22,32) according to the paths that comply with the traffic regulations;
generating an emergency autonomous driving decision according to the emergency path prediction (22b,32b), and providing autonomous vehicle path planning (21b,31b) corresponding to the emergency autonomous driving decision; and
controlling the autonomous vehicle (21,31) to change a driving path and a driving mode on the road (2,3) according to the autonomous vehicle path planning (21b,31b).

11. The autonomous vehicle path prediction method (4) according to claim 10, further comprising:
obtaining general final states (621,622,629) of the at least one surrounding vehicle (22,32), and performing a general path prediction (22a,32a) corresponding to the at least one surrounding vehicle (22,32) when the emergency vehicle (23,33) is not comprised in the vehicles.

12. The autonomous vehicle path prediction method (4) according to claim 11, further comprising:
generating a general autonomous driving decision according to the general path prediction (22a,32a), and providing the autonomous vehicle path planning (21b,31b) corresponding to the general autonomous driving decision.

13. The autonomous vehicle path prediction method (4) according to claim 10, further comprising:

calculating the surrounding vehicle paths (631,632,639) of the at least one surrounding vehicle (22,32) and a corresponding plurality of path costs (641,642,649) according to the current state of the at least one surrounding vehicle (22,32) and the emergency final states (621,622,629); and
calculating a plurality of path probabilities (651,652,659) of the at least one surrounding vehicle (22,32) according to the surrounding vehicle paths (631,632,639) and the path costs (641,642,649) of the at least one surrounding vehicle (22,32).

14. The autonomous vehicle path prediction method (4) according to claim 13, wherein the path probabilities (651,652,659) are between 0 and 1, and a sum of the path probabilities (651,652,659) is 1.

15. The autonomous vehicle path prediction method (4) according to any one of claims 13 to 14, wherein the path costs (641,642,649) and the path probabilities (651,652,659) are in an inverse relationship.

16. The autonomous vehicle path prediction method (4) according to any one of claims 13 to 15, further comprising:

calculating a plurality of expended times that is expended for each of the surrounding vehicle paths (631,632,639);
segmenting each of the expended times into a plurality of time units and forming a plurality of time sets; and
calculating the path costs (641,642,649) corresponding to the surrounding vehicle paths (631,632,639) in each of the time sets with each of the time units as a calculation unit.

17. The autonomous vehicle path prediction method (4) according to claim 16, further comprising:
obtaining a position, a velocity vector, and an acceleration vector of the at least one surrounding vehicle (22,32) in each of the time units in each of the time sets, and calculating the path costs (641,642,649) corresponding to the surrounding vehicle paths (631,632,639).

18. The autonomous vehicle path prediction method (4) according to any one of claims 13 to 17, further comprising:

selecting the surrounding vehicle path (631,632,639) corresponding to the at least one surrounding vehicle (22,32) with a maximum path probability; and
performing the emergency path prediction (22b,32b) corresponding to the emergency vehicle (23,33) or the general path prediction (22a,32a) corresponding to the at least one surrounding vehicle (22,32) according to the selected surrounding vehicle path (631,632,639).

101

103

1

| V2X |

| Database of national laws and regulations |

123

12

Processor

Sensor

Determining module

Path prediction module

Path optimization unit

Probability calculation unit

Emergency decision module

General decision module

Control module

Driving path

Driving mode

122a

122b

11

121

122

125

124

FIG. 1

FIG. 2A

FIG. 2B

FIG. 3A

FIG. 3B

4

S402 — V2X and sensing signal

S404 — Obtaining a current state of the vehicles

S408 — Obtaining a final state of surrounding vehicles

S406 — Whether emergency vehicles are present?

Yes

No

S410b — Current state of emergency vehicle

S410a — Current state of surrounding vehicles

S412 — Emergency path prediction

S420 — General path prediction

S414 — Emergency autonomous driving decision

S422 — General autonomous driving decision

S416 — Autonomous vehicle path planning

S418 — Controlling the autonomous vehicle

FIG. 4

5

| | | V2X and sensing signal | S402 |

| 102 | | | |

| Map information | → | Obtaining a current state of the vehicles | S404 |

Whether emergency vehicles are present? — S406

No

Yes

Obtaining the current state of the emergency vehicle — S504

103

Database of national laws and regulations → Selecting paths that comply with regulations — S506

Obtaining a final state of surrounding vehicles — S508

# FIG. 5

FIG. 6

_7_

```
                              ┌─ S701
                    ┌──────────────────┐
                    │      Timer       │
                    └──────────────────┘
   ┌─ S711                    │    ┌─ S702
┌──────────────────┐   ┌──────────────────┐        ┌──────────────────┐
│ Previous general │   │  Varying time    │        │ Previous emergency │─ S721
│ path prediction  │   │   difference     │        │  path prediction  │
└──────────────────┘   └──────────────────┘        └──────────────────┘
         │          ┌─ S713     │                           │    ┌─ S723
┌──────────────────┐            │          ┌──────────────────┐
│  Selecting state │◄───────────┴─────────►│  Selecting state │
└──────────────────┘                       └──────────────────┘
         │          ┌─ S715                          │    ┌─ S725
┌──────────────────┐                       ┌──────────────────┐
│ General expected │                       │ Emergency expected│
│      state       │                       │      state       │
└──────────────────┘                       └──────────────────┘
         │                    ┌─ S703              │              ┌─ S704
         │          ┌──────────────────┐                 ┌──────────────────┐
         └─────────►│  Least squares   │◄────────────────│  Practical state │
                    │  weight fitting  │◄────────────────
   ┌─ S717          └──────────────────┘
┌──────────────────┐         │              ┌──────────────────┐─ S727
│ General prediction│◄───────┴─────────────►│    Emergency     │
│      weight      │                        │ prediction weight │
└──────────────────┘                        └──────────────────┘
```

FIG. 7

Europäisches
Patentamt

European
Patent Office

Office européen
des brevets

# EUROPEAN SEARCH REPORT

Application Number

EP 22 21 4835

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/302781 A1 (TAO JIAMING [US] ET AL) 3 October 2019 (2019-10-03) * paragraphs [0001] - [0004], [0018], [0021], [0024], [0025], [0027], [0030], [0032] - [0041], [0045], [0046], [0048] * | 1-20 | INV. G08G1/0965 G08G1/16 B60W30/095 |
| X | US 2017/192429 A1 (TSENG FLING FINN [US] ET AL) 6 July 2017 (2017-07-06) * paragraphs [0001], [0007] - [0009], [0013], [0017], [0020], [0021], [0023], [0025], [0029] - [0034], [0038] - [0041] * * figures 3-5 * | 1-20 | |
| X | US 2018/137756 A1 (MOOSAEI MARYAM [US] ET AL) 17 May 2018 (2018-05-17) * paragraphs [0011] - [0018], [0030], [0037], [0039], [0042], [0043], [0048], [0049] * * figures 2-4, 5A, 5B * | 1-20 | |
| X | US 2020/276973 A1 (MEIJBURG MARIA ANTOINETTE [US] ET AL) 3 September 2020 (2020-09-03) * paragraphs [0004] - [0006], [0043] - [0046], [0062], [0067], [0089] - [0092], [0101] - [0110], [0119] - [0126] * * paragraphs [0131] - [0135], [0141], [0158], [0159] * * figures 13-21 * | 1-20 | TECHNICAL FIELDS SEARCHED (IPC) G08G B60W |
| A | US 2021/094558 A1 (GARCIA ZACHARY [US] ET AL) 1 April 2021 (2021-04-01) * paragraphs [0001], [0022] - [0027], [0045], [0083] * * figures 3, 6, 8, 9, 12, 13 * | 1-20 | |

The present search report has been drawn up for all claims

| Place of search | Date of completion of the search | Examiner |
|---|---|---|
| The Hague | 3 August 2023 | Roxer, Adam |

EPO FORM 1503 03.82 (P04C01)

## ANNEX TO THE EUROPEAN SEARCH REPORT
## ON EUROPEAN PATENT APPLICATION NO.

EP 22 21 4835

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2023

| Patent document cited in search report | | | Publication date | Patent family member(s) | | | Publication date |
|---|---|---|---|---|---|---|---|
| US 2019302781 | A1 | | 03-10-2019 | CN | 110349404 | A | 18-10-2019 |
| | | | | JP | 6831419 | B2 | 17-02-2021 |
| | | | | JP | 2019184603 | A | 24-10-2019 |
| | | | | US | 2019302781 | A1 | 03-10-2019 |
| US 2017192429 | A1 | | 06-07-2017 | CN | 107021099 | A | 08-08-2017 |
| | | | | DE | 102016125275 | A1 | 06-07-2017 |
| | | | | GB | 2547972 | A | 06-09-2017 |
| | | | | US | 2017192429 | A1 | 06-07-2017 |
| US 2018137756 | A1 | | 17-05-2018 | CN | 108068819 | A | 25-05-2018 |
| | | | | DE | 102017126790 | A1 | 17-05-2018 |
| | | | | GB | 2558404 | A | 11-07-2018 |
| | | | | RU | 2017134864 | A | 04-04-2019 |
| | | | | US | 2018137756 | A1 | 17-05-2018 |
| US 2020276973 | A1 | | 03-09-2020 | CN | 111708358 | A | 25-09-2020 |
| | | | | EP | 3703028 | A1 | 02-09-2020 |
| | | | | KR | 20200106131 | A | 11-09-2020 |
| | | | | US | 2020276973 | A1 | 03-09-2020 |
| US 2021094558 | A1 | | 01-04-2021 | US | 2021094558 | A1 | 01-04-2021 |
| | | | | US | 2023071224 | A1 | 09-03-2023 |
| | | | | WO | 2021066862 | A1 | 08-04-2021 |

EPO FORM P0459

For more details about this annex : see Official Journal of the European Patent Office, No. 12/82